# FASCICULE DE BREVET EUROPEEN

(11) **EP 1 009 512 B1**
(45) Date de publication et mention de la délivrance du brevet: **18.09.2002**
(21) Numéro de dépôt: 98921564.5
(22) Date de dépôt: 17.04.1998
(51) Int. Cl.: B01D 35/30, B01D 35/153

(54) **FILTRE ET CARTOUCHE DE FILTRAGE A FLASQUE FLEXIBLE POUR LE FILTRAGE DE LIQUIDES CIRCULANT DANS UN MOTEUR OU DANS UN EQUIPEMENT HYDRAULIQUE**
FILTER UND FILTERKARTUSCHE MIT FLEXIBLEM FLANSCH FÜR DIE FILTRATION VON FLÜSSIGKEITEN, DIE IN EINEM MOTOR ODER EINER HYDRAULIK ZIRKULIEREN
FILTER AND FILTERING CARTRIDGE WITH FLEXIBLE FLANGE FOR FILTERING LIQUIDS CIRCULATING IN AN ENGINE OR IN A HYDRAULIC EQUIPMENT

(30) Priorité: 18.04.1997 FR 9705042
(43) Date de publication de la demande: 21.06.2000
(73) Titulaire: FLEETGUARD, 29556 Quimper Cédex 9 (FR)
(72) Inventeur: GUICHAOUA, Jean-Luc, F-29120 Combrit (FR); AUFFRET, Guy, F-29510 Langolen (FR)
(74) Mandataire: Vidon, Patrice
(86) Numéro de dépôt international: FR9800787
(87) Numéro de publication internationale: WO98047598

(56) Documents cités:
- WO-A-92/20425
- DE-A- 4 428 771
- FR-A- 2 715 080
- GB-A- 789 280

## Description

Le domaine de l'invention est celui du filtrage d'un liquide, notamment l'huile, le carburant ou le liquide de refroidissement, circulant dans un moteur, en particulier dans un moteur thermique, ou dans un équipement hydraulique.

Plus précisément, l'invention concerne un filtre du type comprenant une cuve accueillant une cartouche de filtrage et pouvant être fermée par un élément de fermeture, ladite cartouche de filtrage étant amovible et pouvant être remplacée après un certain temps d'usage. Ce type de cartouche présente généralement une forme tubulaire et délimite, au sein du filtre, un compartiment amont de filtration et un compartiment aval de filtration. Il existe ainsi des filtres dans lesquels le compartiment amont de filtration est formé entre la paroi intérieure de la cuve et l'extérieur de la cartouche alors que le compartiment aval de filtration est constituée par la chambre interne de la cartouche, alors qu'inversement, dans d'autres types de filtres c'est la chambre interne de la cartouche qui constitue le compartiment amont de filtration, le compartiment aval étant formé entre la paroi intérieure de la cuve et la paroi extérieure de la cartouche.

De façon classique, la cartouche est calée ou limitée en déplacement longitudinal à l'intérieur de la cuve par double contact, soit à une extrémité haute avec la tête de filtre et à une extrémité basse avec le fond de la cuve soit, inversement à une extrémité basse avec le bas du filtre et à une extrémité haute avec la tête de cuve.

Le fonctionnement de ce genre de filtre est le suivant : le liquide à filtrer (par exemple de l'huile) est introduit par un orifice d'admission de la tête, arrive dans une cavité latérale de la cuve, s'écoule essentiellement le long de la paroi interne de la cuve, passe à travers un élément filtrant de la cartouche qui retient les particules se trouvant en suspension dans le liquide, puis le liquide ainsi filtré passe à travers une cavité centrale de la cuve, et sort par un orifice d'évacuation de la tête.

Dans certains types de moteurs, la cuve du filtre est intégrée au bloc moteur et fermée par un couvercle qui peut être ôté pour accéder à la cartouche de filtrage, tandis que dans d'autres types de moteur, c'est la cuve du filtre qui est amovible et qui peut être vissée sur une "tête de filtre" intégrée au bloc-moteur. Dans la présente description on entend donc les termes "élément de fermeture" comme visant, soit le couvercle mentionné ci-dessus, soit la tête de filtre.

Lorsque la cartouche placée dans la cuve est usagée, c'est-à-dire lorsque l'élément filtrant ne remplit plus son rôle de filtration de façon satisfaisante, selon les cas on ôte le couvercle ou on sépare la cuve de la tête de filtre, on ôte la cartouche usagée de la cuve, on la remplace par une nouvelle cartouche et on replace la couvercle ou on replace la cuve contre la tête de filtre.

Afin de faciliter le changement de la cartouche, il est souhaitable de vidanger la cuve du liquide qu'elle contient. Pour cette raison, cette cuve est en général équipée de moyens faisant saillie à l'intérieur de la cuve et qui s'ouvrent lorsque la cartouche est retirée de la cuve de façon à autoriser l'évacuation du liquide contenu dans celle-ci.

Par la suite, les cartouches usagées sont incinérées de façon à détruire les matières polluantes organiques et concentrer les matières polluantes inorganiques. Dans le but d'optimiser un telle opération, il a été proposé dans l'état de la technique de réaliser celles-ci à partir de matériaux "verts" pouvant être incinérés en donnant un minimum de matières polluantes. De telles cartouches "vertes" présentent un matériau filtrant (également appelé "médium" dans le langage de l'homme de l'art) constitué de papier, de carton, de tissu ou de matériau tissé ou non tissé (ou d'un mélange ou d'une superposition de tels matériaux, dont une couche peut être une couche support), le plus souvent plissé en étoile, et de deux flasques d'extrémité en matériau non métallique qui préférentiellement ne sont reliés entre eux par aucune liaison rigide, ce qui facilite encore leur incinération, la suppression d'un tel élément rigide permettant de diminuer notablement la proportion de matériau plastique nécessaire à la fabrication de telles cartouches. Dans le cas de la présence d'un matériau support, celui-ci peut être rigide ou de flexibilité choisie.

Ce genre de cartouche de filtrage présente toutefois plusieurs inconvénients.

Un premier inconvénient est lié au calage longitudinal de la cartouche à l'intérieur de la cuve. En effet, le jeu longitudinal de la cartouche dans la cuve dépend du dimensionnement de la cuve et celui-ci doit être étudié pour, qu'après le serrage de l'élément de fermeture avec la cuve du filtre, on obtienne un calage optimisé de la cartouche à l'intérieur de cette cuve.

L'expérience montre néanmoins que, quelque soit le soin apporté aux tolérances de fabrication de ces éléments, la cartouche est fréquemment susceptible d'un léger mouvement selon l'axe longitudinal du filtre résultant d'un léger jeu (réel ou potentiel) lors du montage de la cartouche dans le filtre.

Lors du fonctionnement du véhicule, ce léger jeu peut autoriser la vibration de la cartouche et, au bout d'un certain temps, la détérioration de l'étanchéité entre les compartiments délimités par la cartouche et donc la détérioration prématurée de ses qualités de filtrage.

Ce problème est accru avec les cartouches de filtrage dites "vertes", notamment celles décrites ci-dessus, qui présentent, de par la nature même du matériau filtrant les constituant (papier, carton...) une propension à varier de longueur en fonction notamment de la température et/ou de l'humidité et /ou de l'action du fluide. En effet, de telles cartouches sont de plus en plus fréquemment utilisées et sont appelées d'une part à être fabriquées et stockées dans des lieux caractérisés par des taux d'humidité pouvant fortement varier, et d'autre part à être montées sur des véhicules susceptibles d'être exposés tant à des températures extrêmement basses qu'à des températures élevées.

L'objectif principal de la présente invention est de proposer des moyens permettant d'optimiser le calage des cartouches de filtrage dans les filtres, tant au serrage que lors de l'utilisation.

Un autre objectif de l'invention est également de décrire de tels moyens qui puissent avantageusement être mis en oeuvre sur les cartouches "vertes".

Un autre inconvénient des filtres classiques de l'état de la technique est lié au fonctionnement des moyens de vidange dont ils sont équipés.

Lors de l'opération de changement des cartouches de filtrage, il est en effet nécessaire d'évacuer rapidement l'essentiel du liquide présent dans la cuve de filtrage de façon à pouvoir retirer la cartouche usagée en entraînant lors de ce retrait la plus petite quantité possible de ce liquide. A cette fin, plusieurs types de moyens de vidange de la cuve de filtrage ont été proposés dans l'état de la technique.

Ainsi, certains moyens de vidange comprennent un dispositif à clapet, faisant saillie à l'intérieur de la cuve, et permettant de fermer un orifice de vidange de la cuve lorsque la cartouche de filtrage est insérée dans celle-ci et d'ouvrir cet orifice de vidange lorsque cette cartouche en est retirée. Ce type de moyens de vidange présente principalement deux inconvénients. En premier lieu, il est techniquement difficile et donc coûteux à réaliser. En second lieu, le clapet dont il est pourvu est susceptible de se bloquer. Le clapet peut ainsi se bloquer:
- soit en en position ouverte et entraîner une dérivation permanente d'une partie du débit susceptible de mettre la vie du moteur en danger, et une vidange à chaque arrêt, ce qui provoque une usure accélérée du moteur,
- soit en position fermée ce qui conduit à l'impossiblité de vidanger la cuve.

D'autres moyens de vidange mettent en oeuvre un ressort d'éjection monté sur un tube central autour duquel la cartouche de filtrage est positionnée. Ces moyens présentent sensiblement les mêmes inconvénients que ceux mentionnés ci-dessus à l'égard des dispositifs à clapets.

Un autre objectif de la présente invention est donc de divulguer de nouveaux moyens de vidange ne présentant pas les deux inconvénients ci-dessus mentionnés.

Plus précisément, un objectif de l'invention est de proposer des moyens permettant une vidange automatique de la cuve du filtre n'impliquant pas l'intégration d'éléments rapportés tels que des ressorts ou des clapets.

Ces différents objectifs, ainsi que d'autres qui apparaitront par la suite, sont atteints grâce à l'invention qui concerne un filtre pour liquide circulant dans un moteur ou un équipement hydraulique incluant une cuve coopérant avec un élément de fermeture, et une cartouche de filtrage insérée dans ladite cuve et calée dans celle-ci par serrage dudit élément de fermeture avec ladite cuve,
dans lequel ladite cartouche est du type comprenant un matériau filtrant terminé à l'une de ses extrémités par un premier flasque et à l'autre de ses extrémités par un second flasque,
caractérisé en ce que ledit second flasque présente une partie périphérique destinée à être bloquée dans un plan de serrage entre ladite cuve et ledit élément de fermeture selon une relation d'étanchéité, une partie centrale fixée audit matériau filtrant et une partie flexible soit ajourée, soit pleine et présentant une épaisseur essentiellement inférieure à celle de la partie centrale, ladite partie flexible ne recouvrant pas le matériau filtrant et reliant ladite partie périphérique à ladite partie centrale, de façon telle que, après serrage dudit élément de fermeture avec ladite cuve et/ou lors du fonctionnement dudit filtre, ladite partie centrale puisse adopter une position de calage selon au moins un plan de calage différent du plan de serrage adopté par ladite partie périphérique.

Selon une telle caractéristique, lors du serrage de l'élément de fermeture avec la cuve du filtre et lors du fonctionnement du filtre, il est possible d'optimiser le calage de la cartouche de filtrage en plaquant celle-ci au fond de la cuvé tout en la maintenant sur sa périphérie, pour :
- permettre à la cartouche de coopérer de façon très intime avec le fond de la cuve pour garantir l'étanchéité inférieure du filtre, tant initiale qu'en cours de fonctionnement ;
- atténuer les vibrations pouvant survenir lors de l'utilisation du filtre et ainsi allonger la durée de vie de la cartouche ;
- éviter les compressions localisées des joints d'étanchéité pouvant résulter de défauts de coaxialité de la cartouche et du corps du filtre.

Au sujet de ce dernier point, on notera que l'effort exercé au serrage sur la cartouche par l'élément de fermeture et celui généré, en cours de fonctionnement du filtre, par la différence des pressions régnant dans le compartiment amont et dans le compartiment aval de filtration se conjuguent pour plaquer la cartouche de filtrage au fond de la cuve.

On notera que, selon GB-A-789 280, on connaissait déjà une cartouche de filtration dont le flasque supérieur pouvait être réalisé en matériau flexible.

On pourra envisager d'organiser la flexibilité du second flasque de la cartouche selon de multiples modes de réalisation.

Ainsi, selon un mode de réalisation de l'invention, la partie intermédiaire flexible dudit second flasque de ladite cartouche .de filtrage est ajourée. La forme et la surface des orifices correspondants seront choisies en fonction du degré dé flexibilité que l'on souhaitera obtenir, c'est-à-dire en fonction de l'amplitude maximale entre le plan de serrage de la partie périphérique et le plan de calage le plus bas de la cartouche.

Selon un autre mode de réalisation de l'invention, ladite partie intermédiaire dudit second flasque de ladite cartouche de filtrage est pleine et présente une épaisseur essentiellement inférieure à celle de ladite partie centrale permettant d'affaiblir quelque peu sa résistance mécanique et donc de lui conférer le caractère de flexibilité recherché.

Bien sûr, ces deux modes de réalisation de la partie intermédiaire flexible seront utilisés essentiellement pour les flasques dont les trois parties sont réalisées en un seul et même matériau.

Avantageusement, ledit matériau filtrant de ladite cartouche de filtrage est choisi dans le groupe constitué par le papier, le carton, le tissu, les matériaux constitués de fibres tissées ou non tissées ou par un mélange ou une superposition de ces produits. Ces matériaux correspondent à ceux utilisés pour réaliser les cartouches dites "vertes" décrites ci-dessus qui présentent l'avantage d'être complètement incinérables. L'invention apparait en effet tout particulièrement intéressante pour ces cartouches qui, comme déjà précisé, montrent une longueur difficile à maîtriser et impliquent donc au cours de leur utilisation des risques de défaut d'étanchéité au niveau de la partie inférieure du filtre.

Egalement avantageusement, ledit second flasque et ledit premier flasque de ladite cartouche de filtrage ne sont reliés entre eux que par ledit matériau filtrant. Les premier et second flasques peuvent être solidarisées au matériau filtrant selon plusieurs techniques connues de l'homme de l'art (collage, incrustation ou soudure, etc...). Ces cartouches sont particulièrement intéressantes d'un point de vue écologique car elle ne présentent que des flasques en plastique, le reste étant constitué par le matériau filtrant. De plus, elles peuvent être réalisées sans collage. En l'absence de structures de renfort prévues à l'intérieur du matériau filtrant, les risques de variations de longueur de celui-ci sont encore plus élevées et l'invention est particulièrement indiquée pour résoudre ce problème.

Selon une variante particulièrement préférée de l'invention, ladite cuve présente au moins un orifice de vidange obturé par ledit premier flasque lorsque ladite cartouche de filtrage est bloquée à l'intérieur de ladite cuve et ouvert dès que ladite cartouche de filtrage est retirée de ladite cuve ou soulevée d'une certaine hauteur. De tels moyens autorisent une vidange automatique de la cuve lors du retrait de la cartouche de filtrage et ne mettent en oeuvre aucun élément faisant saillie à l'intérieur de la cuve. Une telle vidange automatique n'est autorisée que grâce aux moyens techniques proposés par l'invention permettant de sécuriser le calage de la cartouche au fond de la cuve et ainsi d'empêcher toute fuite du liquide par l'orifice de vidange pendant le fonctionnement du filtre. En l'absence d'un tel calage optimisé par la flexibilité du second flasque, le calage de la cartouche par le seul serrage de l'élément de fermeture sur la cuve ne saurait en effet écarter tout risque de mouvement de la cartouche selon son axe longitudinal et donc tout risque de fuite de liquide par l'orifice de vidange.

Egalement préférentiellement, ledit premier flasque de ladite cartouche de filtrage présente une gorge circulaire coaxiale à l'axe longitudinal de ladite cartouche communiquant directement avec l'orifice de vidange de ladite cuve, ladite gorge présentant un joint d'étanchéité interne et un joint d'étanchéité externe, le joint d'étanchéité externe étant destiné à organiser l'étanchéité, en partie inférieure du filtre, avec le compartiment amont de filtration et avec l'orifice de vidange et le joint d'étanchéité interne, l'étanchéité avec le compartiment aval de filtration et l'orifice de vidange.

Selon une variante, ladite cuve coopère avec un noyau central amovible autour duquel ladite cartouche de filtrage est positionnée. Une telle caractéristique, qui est décrite dans le brevet français FR 2715080 de la Demanderesse, favorise l'emploi des cartouches "vertes".

Dans ce cas, l'orifice de vidange pourra âtre prévu dans le noyau central, le premier flasque étant alors pourvu de joints permettant d'assurer l'étanchéité de cet orifice.

Selon un mode de réalisation de l'invention, ledits joints d'étanchéité dudit premier flasque de ladite cartouche de filtrage sont surmoulés dans ledit premier flasque.

Selon un autre mode de réalisation de l'invention, ces joints pourront être également des joints toriques, ou des joints doubles.

Avantageusement, ladite partie périphérique dudit second flasque de ladite cartouche de filtrage présente un joint d'étanchéité intégré. Une telle intégration a pour objet d'éviter toutes les opérations de maintenance de joint lors du positionnement et du changement de la cartouche dans le filtre.

Egalement avantageusement, ladite partie périphérique dudit second flasque de ladite cartouche de filtrage présente une butée. Un telle butée permet d'obtenir un couple de serrage d'une valeur prédéterminée et fixe lors de l'opération de serrage de l'élément de fermeture sur la cuve.

Egalement selon une variante de l'invention, ledit élément de fermeture du filtre présente des moyens permettant de bloquer ladite cartouche de filtrage-dans ledit élément de fermeture, afin qu'ils soient solidaires au montage et au démontage mais faciles à séparer une fois ledit démontage effectué. Une telle caractéristique a pour objet d'éviter à l'opérateur le contact avec le liquide usagé lors l'opération de changement de la cartouche.

L'invention couvre également toute cartouche à flasque(s) flexible(s) pouvant être utilisée pour un filtre tel que décrit ci-dessus.

L'invention, ainsi que les différents avantages qu'elle présente, seront plus facilement compris grâce à la description qui va suivre de deux modes non limitatif de réalisation d'un filtre selon l'invention en référence aux dessins dans lesquels :
- la figure 1 représente une vue en coupe longitudinale d'un mode de réalisation à "cartouche plaquée" d'un filtre à huile selon l'invention ;
- la figure 2 représente une vue en coupe longitudinale de la cartouche de filtrage du filtre montré à la figure 1;
- la figure 3 montre une vue agrandie en coupe de la partie cerclée C sur la figure 2;
- la figure 4 représente une vue supérieure de la moitié du second flasque de la cartouche de filtrage montrée à la figure 2;
- la figure 5 représente schématiquement le fonctionnement du flasque flexible du filtre à huile représenté aux figures 1 à 4;
- la figure 6 représente schématiquement le fonctionnement du flasque flexible d'un autre filtre "à cartouche suspendue" selon l'invention dans le cadre de son utilisation dans un autre type de filtre, à savoir un filtre à carburant;
- la figure 7 représente une vue en coupe partielle de la partie inférieure d'un filtre pouvant être utilisé dans le cadre de la présente invention;
- la figure 8 représente une vue en coupe partielle de la partie inférieure d'un filtre pouvant être utilisé dans le cadre de l'invention.

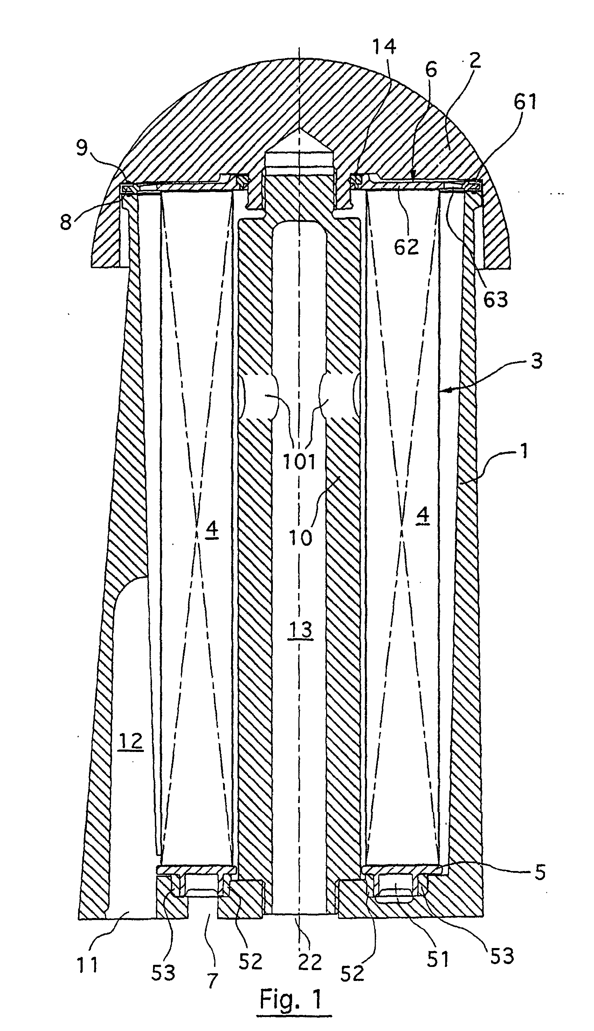

En référence à la figure 1, le filtre représenté comprend quatre éléments principaux, à savoir:
- une cuve 1 destinée à être fixée sur un organe solidaire (représenté) d'un bloc-moteur d'un véhicule et pourvue d'un orifice d'admission 11 d'un liquide à filtrer (en l'occurence de l'huile), d'un orifice de sortie du liquide filtré 22 et d'un orifice de vidange 7;
- un élément de fermeture formant couvercle 2 vissé sur la cuve 1 en cours du fonctionnement du filtre ;
- une cartouche de filtrage 3 tubulaire, incluant un second flasque 6 et un premier flasque 5 en matière plastique soudés à chacune des extrémités d'un élément de matériau filtrant 4 constitué par un matériau ("médium") plissé en étoile ; et,
- un noyau central 10 creux pourvu d'ouvertures 101 communiquant avec sa lumière intérieure, ledit noyau central étant vissé par son extrémité supérieure dans le couvercle 2 de façon à s'étendre selon l'axe longitudinal du filtre, ladite cartouche étant positionnée autour de ce noyau central et calée par celui-ci.

Lors du fonctionnement du filtre, le liquide à filtrer est introduit sous pression dans celui-ci par l'orifice d'admission 11, transite par le compartiment amont 12 de filtration délimité par la paroi intérieure de la cuve 1 et la paroi extérieure de la cartouche 3, est filtré par passage forcé au sein du matériau filtrant 4 et se retrouve dans le compartiment aval 13 de filtration délimité par la lumière longitudinale du noyau central 10 après avoir transité par les ouvertures 101, avant d'être évacué par l'orifice 22.

L'étanchéité supérieure du filtre est obtenue grâce, d'une part, à un joint périphérique 8 intégré à la périphérie du second flasque 6 de la cartouche de filtrage 3 et, d'autre part, à un joint interne 14 surmoulé sur le bord interne de ce même flasque et coopérant avec le couvercle 2. Le second flasque est également doté sur sa périphérie d'une butée 9 permettant de serrer le couvercle 2 sur la cuve 1 selon un couple de serrage fixe.

L'étanchéité inférieure est quant à elle assurée par un joint interne 52 et un joint externe 53 obtenus par surmoulage sur le premier flasque 5 de part et d'autre d'une gorge 51, ladite gorge communiquant avec l'orifice de vidange 7 de la cuve 1.

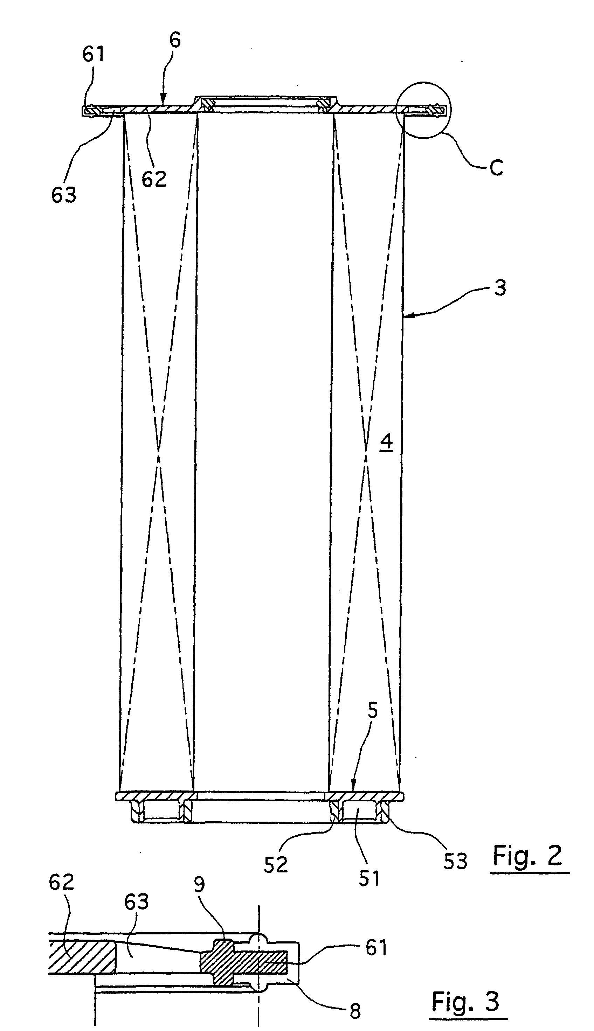

En référence aux figures 2, 3 et 4 et conformément à la présente invention, le second flasque 6 de la cartouche 3 est conçu de façon à être flexible. Plus précisément, ce flasque présente :
- une partie périphérique 61 destinée à être bloquée entre la cuve 1 et le couvercle 2 selon un plan de serrage, ladite partie périphérique étant pourvue du joint intégré 9 et de la butée 8 décrits ci-dessus ;
- une partie centrale 62 fixée au matériau filtrant 4 de la cartouche; et,
- une partie flexible 63 reliant ladite partie périphérique 61 à ladite partie centrale 62.

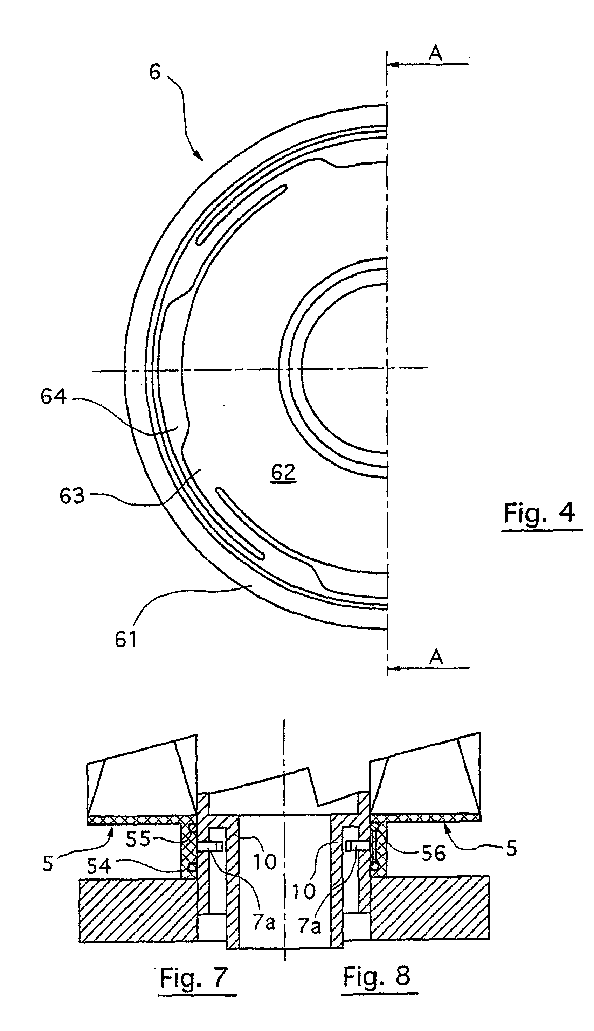

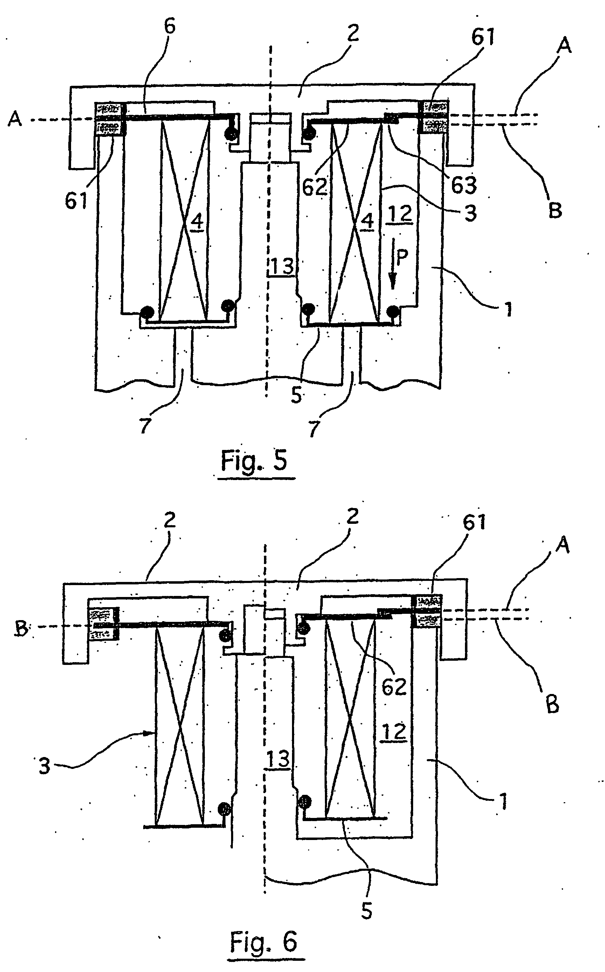

En référence à la figure 4, qui montre une vue supérieure de la moitié du second flasque 6, la moitié non représentée étant symétrique à celle représentée, la partie flexible 63 du flasque 6 est ajourée par des ouvertures 64 dont la forme et la surface sont conçues de façon à conférer à cet élément la flexibilité recherchée. A ce sujet, on notera que la forme des ouvertures montrées à la figure 4 n'est aucunement limitative.

Le fonctionnement du filtre représenté aux figures 1 à 4 est montré schématiquement à la figure 5. La partie gauche de cette figure représente le filtre après serrage du couvercle sur la cuve mais avant le démarrage du moteur du véhicule qu'il équipe, tandis que la partie droite représente le filtre après le démarrage du moteur.

Avant le démarrage du moteur les parties 61,62 et 63 du second flasque 6 sont dans le même plan A, dit plan de serrage. La cartouche 3 n'est alors pas plaquée contre le fond de la cuve 1 car aucun liquide n'arrive sous pression dans le filtre mais le premier flasque 5 est néanmoins suffisamment enfonçé pour réaliser les étanchéités inférieures.

Après le démarrage du moteur, l'huile est amenée sous pression dans le filtre. Le différentiel de pression s'établissant alors entre le compartiment amont 12 et le compartiment aval 13 de filtration plaque la cartouche 3 contre le fond de la cuve 1. Grâce à la flexibilité du second flasque 6 de la cartouche 3, la partie centrale 62 du flasque 6 peut adopter une position selon un plan de calage B situé plus bas que le plan de serrage A et permettre ainsi au premier flasque 5 d'assurer une étanchéité parfaite tant avec l'orifice de vidange 7, qu'avec le compartiment aval 13 et le compartiment amont 12 de filtration, tout en supprimant les risques d'usure par vibration.

Ainsi, dans le mode de réalisation "à cartouche plaquée" représenté en référence aux figures 1 à 4, le flasque flexible 6 permet d'éviter une situation hyperstatique tant radiale qu'axiale et d'assurer l'étanchéité inférieure en deux temps, à savoir au serrage, puis sous l'effet de la pression.

Un autre mode de fonctionnement de l'invention "à cartouche suspendue" est représenté en référence à la figure 6 dont la partie gauche représente le couvercle d'un filtre à carburant selon l'invention équipé d'une cartouche de filtrage 3 avant vissage sur la cuve correspondante, et la partie droite après vissage sur la cuve 1. Avant vissage, les trois parties du second flasque 6 sont dans le même plan A tandis qu'après serrage, la flexibilité de la partie 63 permet de placer la partie 61 dans un plan de calage B supérieur au plan A, et ainsi de plaquer la cartouche 3 contre la face interne du couvercle 2 de la cuve 1 pour sécuriser l'étanchéité inférieure.

Ce second mode de réalisation à cartouche suspendue permet de réduire les risques d'usure des joints en situation vibratoire, de rattraper les défauts de coaxialité et d'éviter une situation hyperstatique tant radiale qu'axiale.

En référence aux figures 7 et 8, on notera que dans d'autres modes de réalisation, la vidange pourra être effectuée par des orifices 7a prévus dans le noyau 10. Dans ce cas, le flasque 5 pourra être pourvu d'un jeu de joints toriques d'étanchéité 55,54 (voir figure 7) ou encore d'un joint double d'étanchéité 56 (voir figure 8).

## Revendications

1. Filtre pour liquide circulant dans un moteur ou un équipement hydraulique incluant une cuve (1) coopérant avec un élément de fermeture (2) et une cartouche de filtrage (3) insérée dans ladite cuve (1) et calée dans celle-ci par serrage dudit élément de fermeture (2) avec ladite cuve (1),
dans lequel ladite cartouche de filtrage (3) est du type comprenant un matériau filtrant (4) terminé à l'une de ses extrémités par un premier flasque (5) et à l'autre de ses extrémités par un second flasque (6),
**caractérisé en ce que** ledit second flasque (6) présente une partie périphérique (61) destinée à être bloquée dans un plan de serrage (A) entre ladite cuve (1) et ledit élément de fermeture (2) selon une relation d'étanchéité, une partie centrale (62) fixée audit matériau filtrant et une partie flexible (63) soit ajourée soit pleine et présentant une épaisseur essentiellement inférieure à celle de la partie centrale, ladite partie flexible ne recouvrant pas le matériau filtrant et reliant ladite partie périphérique (61) à ladite partie centrale (62), de façon telle que, après serrage dudit élément de fermeture (2) sur ladite cuve (1) et/ou lors du fonctionnement dudit filtre, ladite partie centrale (62) puisse adopter une position de calage selon au moins un plan de calage (B) différent du plan de serrage (A) adopté par ladite partie périphérique (61).

2. Filtre selon la revendication 1 **caractérisé en ce que** ledit matériau filtrant (4) de ladite cartouche de filtrage (3) est choisi dans le groupe constitué par le papier, le carton, le tissu, les matériaux constitués de fibres tissées ou non tissées, ou par un mélange ou une superposition de ces produits.

3. Filtre selon la revendication 2 **caractérisée en ce que** ledit second flasque (6) et ledit premier flasque (5) de ladite cartouche de filtrage (3) ne sont reliés entre eux que par ledit matériau filtrant (4).

4. Filtre selon l'une quelconque des revendications 1 à 3 **caractérisé en ce que** ladite cuve (1) présente au moins un orifice de vidange (7) obturé par ledit premier flasque (5) lorsque ladite cartouche de filtrage (3) est bloquée à l'intérieur de ladite cuve (1) et ouvert dès que ladite cartouche de filtrage (3) est retirée de ladite cuve (1) ou soulevée d'une certaine hauteur.

5. Filtre selon la revendication 4 **caractérisé en ce que** ledit premier flasque (5) de ladite cartouche de filtrage présente une gorge circulaire (51) coaxiale à l'axe longitudinal de ladite cartouche de filtrage (3) communiquant directement avec l'orifice de vidange (7) de ladite cuve (1), ladite gorge présentant un joint d'étanchéité interne (52) et un joint d'étanchéité externe (53).

6. Filtre selon l'une des revendications 1 à 5 **caractérisé en ce que** ladite cuve (1) coopère avec un noyau central (10) autour duquel ladite cartouche de filtrage (3) est positionnée.

7. Filtre selon les revendications 4 et 6 **caractérisé en ce qu'**il présente au moins un orifice de vidange (7a) prévu dans ledit noyau central (10) et **en ce que** ledit premier flasque (5) est pourvu d'au moins un joint d'étanchéité (54, 55, 56).

8. Filtre selon l'une des revendications 5 à 7 **caractérisé en ce que** le ou lesdits joints d'étanchéité (52, 53) sont surmoulés dans ledit premier flasque (5).

9. Filtre selon l'une des revendications 5 à 7 **caractérisé en ce que** le ou lesdits joints d'étanchéité sont choisis dans le groupe constitué par les joints toriques (54, 55) et les joints doubles (56).

10. Filtre selon l'une quelconque des revendications 1 à 9 **caractérisé en ce que** ladite partie périphérique (61) dudit second flasque (6) de ladite cartouche de filtrage (3) présente au moins un joint d'étanchéité intégré (8).

11. Filtre selon l'une quelconque des revendications 1 à 10 **caractérisé en ce que** ladite partie périphérique (61) dudit second flasque de ladite cartouche de filtrage présente une butée (9).

12. Filtre selon l'une des revendications 1 à 11 **caractérisé en ce que** ledit élément de fermeture (2) présente des moyens permettant de bloquer ladite cartouche de filtrage (3) dans ledit élément de fermeture (2) afin qu'ils soient solidaires au montage et au démontage mais faciles à séparer une fois ledit démontage effectué.

13. Cartouche spécialement conçue pour un filtre selon l'une des revendications 1 à 12 du type comprenant un matériau filtrant (4) terminé à l'une de ses extrémités par un premier flasque (5) et à l'autre de ses extrémités par un second flasque (6),
**caractérisée en ce que** ledit second flasque (6) présente une partie périphérique (61) destinée à être bloquée dans un plan de serrage (A) entre ladite cuve (1) et ledit élément de fermeture (2) selon une relation d'étanchéité, une partie centrale (62) fixée audit matériau filtrant et une partie flexible (63) soit ajourée soit pleine et présentant une épaisseur essentiellement inférieure à celle de la partie centrale, ladite partie flexible ne recouvrant pas le matériau filtrant et reliant ladite partie périphérique (61) à ladite partie centrale (62), de façon telle que, lorsque ledit élément de fermeture (2) est serré sur ladite cuve (1), ladite partie centrale (62) puisse adopter une position de calage selon un plan de calage (B) différent du plan de serrage (A) adopté par ladite partie périphérique (61).

## Patentansprüche

1. Filter für in einem Motor oder in einer Hydraulikeinrichtung zirkulierende Flüssigkeit, enthaltend ein Gehäuse (1), das mit einem Verschlusselement (2) und einer Filterkartusche (3) zusammenwirkt, die in das Gehäuse (1) eingesetzt und in diesem durch Verspannen des Verschlusselements (2) mit dem Gehäuse (1) befestigt ist,
bei dem die Filterkartusche (3) von der Art ist, umfassend ein Filtermaterial (4), das am einen seiner Enden mit einem ersten Flansch (5) und am anderen seiner Enden mit einem zweiten Flansch (6) endet,
**dadurch gekennzeichnet, dass** der zweite Flansch (6) einen Umfangsteil (61), der dazu bestimmt ist, in einer Einspannebene (A) zwischen dem Gehäuse (1) und dem Verschlusselement (2) gemäß einer Dichtigkeitsbeziehung festgesetzt zu werden, einen Mittelteil (62), der an dem Filtermaterial befestigt ist, und einen flexiblen Teil (63) aufweist, der entweder durchbrochen oder massiv ist und eine Dicke aufweist, die wesentlich kleiner als diejenige des Mittelteils ist, wobei der flexible Teil nicht das Filtermaterial überdeckt und den Umfangsteil (61) mit dem Mittelteil (62) verbindet, so dass nach dem Verspannen des Verschlusselements (2) auf dem Gehäuse (1) und/oder beim Betrieb des Filters der Mittelteil (62) eine Einstellposition gemäß mindestens einer Einstellebene (B) einnehmen kann, die sich von der vom Umfangteil (61) eingenommenen Einspannebene (A) unterscheidet.

2. Filter nach Anspruch 1, **dadurch gekennzeichnet, dass** das Filtermaterial (4) der Filterkartusche (3) aus der Gruppe ausgewählt ist, die von Papier, Pappe, Textilerzeugnis, Stoffen bestehend aus gewebten oder ungewebten Fasern oder von einer Mischung oder Überlagerung dieser Produkte gebildet wird.

3. Filter nach Anspruch 2, **dadurch gekennzeichnet, dass** der zweite Flansch (6) und der erste Flansch (5) der Filterkartusche (3) untereinander nur durch das Filtermaterial (4) verbunden sind.

4. Filter nach einem der Ansprüche 1 bis 3, **dadurch gekennzeichnet, dass** das Gehäuse (1) mindestens eine Ablassöffnung (7) aufweist, die durch den ersten Flansch (5) verschlossen ist, wenn die Filterkartusche (3) im Inneren des Gehäuses (1) festgesetzt ist, und offen, sobald die Filterkartusche (3) aus dem Gehäuse (1) herausgenommen oder um eine gewisse Höhe angehoben worden ist.

5. Filter nach Anspruch 4, **dadurch gekennzeichnet, dass** der erste Flansch (5) der Filterkartusche eine zur Längsachse der Filterkartusche (3) koaxiale kreisförmige Hohlkehle (51) aufweist, die direkt mit der Ablassöffnung (7) des Gehäuses (1) kommuniziert, wobei die Hohlkehle eine innere Dichtung (52) und eine äußere Dichtung (53) aufweist.

6. Filter nach einem der Ansprüche 1 bis 5, **dadurch gekennzeichnet, dass** das Gehäuse (1) mit einem zentralen Kern (10) zusammenwirkt, um den herum die Filterkartusche (3) angeordnet ist.

7. Filter nach den Ansprüchen 4 und 6, **dadurch gekennzeichnet, dass** er mindestens eine Ablassöffnung (7a) aufweist, die im zentralen Kern (10) vorgesehen ist, und dass der erste Flansch (5) mit mindestens einer Dichtung (54, 55, 56) versehen ist.

8. Filter nach einem der Ansprüche 5 bis 7, **dadurch gekennzeichnet, dass** die Dichtung oder die Dichtungen (52, 53) im ersten Flansch (5) angeformt sind.

9. Filter nach einem der Ansprüche 5 bis 7, **dadurch gekennzeichnet, dass** die innere Dichtung oder die inneren Dichtungen (52,53) aus der Gruppe ausgewählt sind, die von Ringdichtungen (54, 55) und Doppeldichtungen (56) gebildet wird.

10. Filter nach einem der Ansprüche 1 bis 9, **dadurch gekennzeichnet, dass** der Umfangsteil (61) des zweiten Flanschs (6) der Filterkartusche (3) mindestens eine integrierte Dichtung (8) aufweist.

11. Filter nach einem der Ansprüche 1 bis 10, **dadurch gekennzeichnet, dass** der Umfangsteil (61) des zweiten Flanschs (6) der Filterkartusche (3) einen Anschlag (9) aufweist.

12. Filter nach einem der Ansprüche 1 bis 11, **dadurch gekennzeichnet, dass** das Verschlusselement (2) Einrichtungen aufweist, die es gestatten die Filterkartusche (3) im Verschlusselement (2) festzusetzen, damit sie bei der Montage und Demontage fest damit verbunden sind, jedoch leicht davon zu trennen sind, sobald die Demontage durchgeführt worden ist.

13. Kartusche, speziell konzipiert für einen Filter nach einem der Ansprüche 1 bis 12, von der Art umfassend ein Filtermaterial (4), das am einen seiner Enden mit einem ersten Flansch (5) und am anderen seiner Enden mit einem zweiten Flansch (6) endet,
**dadurch gekennzeichnet, dass** der zweite Flansch (6) einen Umfangsteil (61), dazu bestimmt ist, in einer Einspannebene (A) zwischen dem Gehäuse (1) und dem Verschlusselement (2) gemäß einer Dichtigkeitsbeziehung festgesetzt zu werden, einen Mittelteil (62), der an dem Filtermaterial befestigt ist, und einen flexiblen Teil (63) aufweist, der entweder durchbrochen oder massiv ist und eine Dicke aufweist, die wesentlich kleiner als diejenige des Mittelteils ist, wobei der flexible Teil nicht das Filtermaterial überdeckt und den Umfangsteil (61) mit dem Mittelteil (62) verbindet, so dass, wenn das Verschlusselement (2) auf dem Gehäuse (1) verspannt ist, der Mittelteil (62) eine Einstellposition gemäß mindestens einer Einstellebene (B) einnehmen kann, die sich von der vom Umfangteil (61) eingenommenen Einspannebene (A) unterscheidet.

## Claims

1. Filter for liquid circulating in an engine or in hydraulic equipment including a chamber (1) cooperating with a closing element (2) and a filter cartridge (3) inserted into the said chamber (1) and wedged therein by tightening the said closing element (2) onto the said chamber (1),
wherein the said filter cartridge (3) is of the type comprising a filtration material (4) terminated at one of its ends by a first flange (5) and at the other of its ends by a second flange (6),
**characterized in that** the said second flange (6) has a peripheral part (61) designed to be locked in a tightening plane (A) between the said chamber (1) and the said closing element (2) in a leakproof relationship, a central part (62) fixed to the said filtration material and a flexible part (63) that is either perforated or solid and has a thickness substantially less than that of the central part, the said flexible part not covering the filtration material and connecting the said peripheral part (61) to the said central part (62) so that, after the said closing element (2) is tightened onto the said chamber (1) and/or during the operation of the said filter, the said central part (62) can adopt a wedged position in at least one wedging plane (B) different from the tightening plane (A) adopted by the said peripheral part (61).

2. Filter according to claim 1, **characterized in that** the said filtration material (4) of the said filter cartridge (3) is chosen from the group consisting of paper, board, fabric, materials consisting of woven or non-woven fibres, or of a mixture or an overlay of these products.

3. Filter according to claim 2, **characterized in that** the said second flange (6) and the said first flange (5) of the said filter cartridge (3) are connected together only by the said filtration material (4).

4. Filter according to any one of claims 1 to 3, **characterized in that** the said chamber (1) has at least one draining orifice (7) obstructed by the said first flange (5) when the said filter cartridge (3) is locked inside the said chamber (1) and open as soon as the said filter cartridge (3) is withdrawn from the said chamber (1) or is raised to a certain height.

5. Filter according to claim 4, **characterized in that** the said first flange (5) of the said filter cartridge has a circular groove (51) coaxial with the longitudinal axis of the said filter cartridge (3) communicating directly with the draining orifice (7) of the said chamber (1), the said groove having an inner leakproof seal (52) and an outer leakproof seal (53).

6. Filter according to one of claims 1 to 5, **characterized in that** the said chamber (1) cooperates with a central core (10) around which the said filter cartridge (3) is positioned.

7. Filter according to claims 4 and 6, **characterized in that** it has at least one draining orifice (7a) provided in the said central core (10) and **in that** the said first flange (5) is provided with at least one leakproof seal (54, 55, 56).

8. Filter according to one of claims 5 to 7, **characterized in that** the said leakproof seal or seals (52, 53) is/are overmoulded onto the said first flange (5).

9. Filter according to one of claims 5 to 7, **characterized in that** the said leakproof seal or seals is/are chosen from the group consisting of O-rings (54, 55) and double seals (56).

10. Filter according to any one of claims 1 to 9, **characterized in that** the said peripheral part (61) of the said second flange (6) of the said filter cartridge (3) has at least one integral leakproof seal (8).

11. Filter according to any one of claims 1 to 10, **characterized in that** the said peripheral part (61) of the said second flange of the said filter cartridge has a stop (9).

12. Filter according to one of claims 1 to 11, **characterized in that** the said closing element (2) has means for locking the said filter cartridge (3) in the said closing element (2) so that they are secured during mounting and demounting but are easily separated once the said demounting has been completed.

13. Cartridge that is specially designed for a filter according to one of claims 1 to 12, of the type comprising a filtration material (4) terminated at one of its ends by a first flange (5) and at the other of its ends by a second flange (6),
**characterized in that** the said second flange (6) has a peripheral part (61) designed to be locked in a tightening plane (A) between the said chamber (1) and the said closing element (2) in a leakproof relationship, a central part (62) fixed to the said filtration material and a flexible part (63) that is either perforated or solid and has a thickness substantially less than that of the central part, the said flexible part not covering the filtration material and connecting the said peripheral part (61) to the said central part (62) so that, when the said closing element (2) is tightened onto the said chamber (1), the said central part (62) can adopt a wedged position in a wedging plane (B) different from the tightening plane (A) adopted by the said peripheral part (61).
